# EUROPEAN PATENT APPLICATION

(11) **EP 3 514 647 A2**
(43) Date of publication of application: **24.07.2019**
(21) Application number: 19150596.5
(22) Date of filing: 07.01.2019
(51) Int. Cl.: G05D 1/00, G06F 15/78

(54) **SYSTEM AND METHOD FOR RECONFIGURING A SYSTEM-ON-MODULE FOR AN UNMANNED VEHICLE**

(30) Priority: 19.01.2018 US 201815875381
(71) Applicant: GE Aviation Systems LLC, Grand Rapids, MI 49512 (US)
(72) Inventor: LASSINI, Stefano Angelo Mario, Grand Rapids, MI 49512 (US)
(74) Representative: Openshaw & Co.

(57) **Abstract**

A control system 80 for an unmanned vehicle includes one or more processing units 302 and a programmable logic array 305. The one or more processing units 302 are configured to execute a first vehicle control process. The programmable logic array 305 is in operative communication with the one or more processing units 302 and includes a plurality of logic cells 307. The programmable logic array 305 programs the plurality of logic cells 307 according to first configuration data and executes a second vehicle control process based on the first configuration data. While the unmanned vehicle is operating, the programmable logic array 305 obtains second configuration data for a third vehicle control process to replace the second vehicle control process. Then, while the unmanned vehicle is still operating, the programmable logic array 305 reprograms the plurality of logic cells 307 according to the second configuration data and executes a third vehicle control process.

## Description

### FIELD

The present disclosure relates generally to unmanned vehicles, and more particularly to a control system for an unmanned vehicle.

### BACKGROUND

An unmanned vehicle (UV) is a vehicle having no onboard pilot. Typically, (UVs) such as unmanned aerial vehicles (UAVs) are controlled remotely by a pilot, by onboard control systems, or by a combination of a remote pilot and onboard control system. Most unmanned aerial vehicles include a control system to control vehicle operations. Often, a control system for a UAV includes one or more vehicle control systems including onboard navigation systems such as inertial navigation systems and satellite navigation systems. Unmanned aerial vehicles may use inertial navigation sensors such as accelerometers and gyroscopes for flight positioning and maneuvering and satellite-based navigation for general positioning and wayfinding. Most control systems additionally include one or more mission control systems for performing one or more mission control functions, such as capturing images or delivering a payload. Typically, individual hardware components are provided onboard a UAV for each vehicle control system and each mission control system.

### BRIEF DESCRIPTION

Aspects and advantages of the present disclosure will be set forth in part in the following description, or may be obvious from the description, or may be learned through practice of the present disclosure.

In one example aspect, a control system for an unmanned vehicle includes one or more processing units configured to execute a first vehicle control process. The control system also includes a field programmable gate array in operative communication with the one or more processing units. The field programmable gate array includes a plurality of logic cells. The field programmable gate array is configured to program the plurality of logic cells according to first configuration data and execute a second vehicle control process based on the first configuration data. The field programmable gate array is further configured to obtain, while the unmanned vehicle is operating, second configuration data for a third vehicle control process to replace the second vehicle control process. The field programmable gate array is further configured to reprogram, while the unmanned vehicle is operating, the plurality of logic cells according to the second configuration data and execute a third vehicle control process.

In another example aspect, an unmanned aerial vehicle includes a circuit board comprising a first processing system and a second processing system. The first and second processing system each include a processing unit and a programmable logic array comprising a plurality of logic cells. In example embodiments, at least one of the first and second processing systems is configured to perform operations while the unmanned aerial vehicle is in flight. The operations include detecting the first processing system is compromised and, in response, obtaining configuration data. The operations further include reconfiguring the programmable logic array based on the configuration data.

In yet another example aspect, a method for reconfiguring integrated circuits includes programming, by one or more processing systems, a processing unit of an integrated circuit based on a first set of computer-readable instructions. The method includes configuring, by the one or more processing systems, a programmable logic array of the integrated circuit based on first configuration data. The method includes obtaining, by the one or more processing systems, an object comprising second configuration data that is different than the first configuration data. The object further includes a second set of computer-readable instructions that are different than the first set of computer-readable instructions. The method includes reprogramming, by the one or more processing systems, the processing unit based on the second set of computer-readable instructions. The method includes reconfiguring, by the one or more processing systems, the programmable logic array based on the second configuration data.

These and other features, aspects and advantages of the present disclosure will become better understood with reference to the following description and appended claims. The accompanying drawings, which are incorporated in and constitute a part of this specification, illustrate aspects of the present disclosure and, together with the description, serve to explain the principles of the present disclosure.

### BRIEF DESCRIPTION OF THE DRAWINGS

A full and enabling disclosure of the present disclosure, including the best mode thereof, directed to one of ordinary skill in the art, is set forth in the specification, which makes reference to the appended Figs., in which:
FIG. 1 illustrates an unmanned aerial vehicle according to example embodiments of the present disclosure;
FIG. 2 illustrates a block diagram depicting an example control system for a UAV including a backplane and card architecture according to example embodiments of the present disclosure;
FIG. 3 illustrates a block diagram depicting an example UAV having an onboard control system according to example embodiments of the present disclosure;
FIG. 4 illustrates a block diagram depicting a first circuit board of an onboard control system according to example embodiments of the present disclosure;
FIG. 5 illustrates a block diagram of a first processing system of the first circuit board of FIG. 4 according to example embodiments of the present disclosure;
FIG. 6 illustrates a block diagram of a second processing system of the first circuit board of FIG. 4 according to example embodiments of the present disclosure;
FIG. 7 illustrates a block diagram depicting a second circuit board of an onboard control system according to example embodiments of the present disclosure;
FIG. 8 illustrates a reconfigurable processing system according to example embodiments of the present disclosure;
FIG. 9 illustrates reconfiguration of a field programmable logic array according to example embodiments of the present disclosure;
FIG. 10 illustrates reconfiguration of a field programmable logic array of a first processing system according to example embodiments of the present disclosure;
FIG. 11 illustrates reprogramming of a processing unit and reconfiguration of a field programmable logic array according to example embodiments of the present disclosure;
FIG. 12 illustrates a method for reconfiguring integrated circuits according to example embodiments of the present disclosure;
FIG. 13 illustrates a method for reconfiguring a processing system according to example embodiments of the present disclosure; and
FIG. 14 illustrates another method for reconfiguring a processing system according to example embodiments of the present disclosure.

### DETAILED DESCRIPTION

Reference now will be made in detail to embodiments of the disclosure, one or more examples of which are illustrated in the drawings. Each example is provided by way of explanation, not limitation of the disclosed embodiments. In fact, it will be apparent to those skilled in the art that various modifications and variations can be made in the present disclosure without departing from the scope or spirit of the claims. For instance, features illustrated or described as part of example embodiments can be used with another embodiment to yield a still further embodiment. Thus, it is intended that the present disclosure covers such modifications and variations as come within the scope of the appended claims and their equivalents.

As used in the specification and the appended claims, the terms "first" and "second" may be used interchangeably to distinguish one component from another and are not intended to signify location or importance of the individual components. The singular forms "a", "an", and "the" include plural references unless the context clearly dictates otherwise. The use of the term "about" in conjunction with a numerical value refers to within 25% of the stated amount.

Example aspects of the present disclosure are directed to a control system for providing integrated vehicle and mission control of a UAV. In example embodiments, the control system includes a housing defining an interior and one or more circuit boards disposed within the interior. More particularly, the control system can include a first circuit board having one or more integrated circuits that provide a first processing system and a second processing system. In example embodiments, the first and second processing systems have heterogeneous field programmable gate array architectures to provide diverse, configurable, and certifiable UAV applications.

In example embodiments, the first processing system can include one or more first processing units and a volatile programmable logic array such as a RAM based field programmable gate array. The second processing system can include one or more second processing units and a nonvolatile programmable logic array such as a flash-based field programmable gate array. In some implementations, the flash-based field programmable gate array manages control of one or more vehicle devices of the UAV based on a first vehicle control process implemented by the one or more first processing units and a second vehicle process implemented by the one or more second processing units.

In some examples, the first circuit board includes a first integrated circuit comprising the first processing system and a second circuit board comprising the second processing system. Each processing system may include one or more processing units such as central processing units (CPU), application processing units (APU), real-time processing units (RPU), co-processing processing units, and graphics processing units (GPU). Additionally, each integrated circuit may include an embedded programmable logic array such as a field programmable gate array (FPGA) forming an integrated part of the respective processing system.

In some examples, the first processing system and/or the second processing system may each be provided as a multi-processing core system-on-a-chip. Together, two or more systems on chip configured with processing systems as described may provide a heterogeneous processing system for a UAV.

In example embodiments of the present disclosure, one or more processing units of the first processing system may be configured to execute a first vehicle control process associated with a first vehicle navigation function. The FPGA of the first processing system, which is in operative communication with the one or more processing units and includes a plurality of logic cells, may be configured to program the plurality of logic cells according to first configuration data and execute a second vehicle control process based on the first configuration data. In some examples, the second vehicle control process may be associated with the first vehicle navigation function. Furthermore, when the FPGA executes the second vehicle control process, the FPGA may be configured to enable navigation control of the UAV according to the first vehicle control process.

The FPGA may also be configured to obtain, while the UAV is in flight, second configuration data for a third vehicle control process to replace the second vehicle process. More specifically, the FPGA may be configured to reprogram, while the UAV is in flight, the plurality of logic cells according to the second configuration data and execute a third vehicle control process. In some examples, the third vehicle control process may be associated with the first vehicle navigation function. Furthermore, when the FPGA reprograms the plurality of logic cells, the FPGA may be configured to suspend navigation control of the UAV according to the second vehicle control process and transfer navigation control of the UAV to the third vehicle control process. In this manner, the FPGA can be reprogrammed in flight to provide improved functionality of the UAV.

In example embodiments of the disclosed technology, the first processing system and the second processing system cooperate to provide more reliable, robust, and/or certifiable UAV applications. For example, the first processing system of the first circuit board can be configured to execute a first process for the UAV. The first process may be associated with a first vehicle device of the UAV. The second processing system can be configured to monitor execution of the first process by the first processing system. Similarly, the first processing system can be configured to monitor execution of a process by the second processing system.

More particularly, in some examples one or more first processing units of the first processing system can be configured to execute a plurality of vehicle control processes. A volatile programmable logic array of the first processing system can be configured to execute a plurality of mission control processes. The nonvolatile programmable logic array of the second processing system can be configured to monitor execution of one or more of the vehicle control processes by the one or more first processing units.

In some examples, the second processing system is configured to initiate one or more control actions based on monitoring execution of the process by the first processing system. For example, the nonvolatile programmable logic array of the second processing system can be configured to monitor an output associated with the first processing system. In response to detecting an invalid output, the second processing system can initiate a control action. By way of example, the nonvolatile programmable logic array may restart at least a portion of the first processing system based on an invalid output. In another example, the logic array of the second processing system may restart one or more processes by the first processing system. An invalid output may include a lack of an output from a process or processing system, such as may occur when a process or processing system faults, as well as unexpected signals or values provided as an output.

In some implementations, the second processing system can be configured to transfer control of one or more UAV functions based on monitoring the first processing system. For example, the second processing system may detect an invalid output associated with a first process executed by the first processing system. In response, the second processing system may transfer control of a function or device associated with the first process to a second process. For instance, the second processing system may transfer control of a UAV device or an autopilot function from the first processing system to the second processing system. In some examples, the second processing system can be configured to execute the second process in response to detecting the invalid output.

Embodiments of the disclosed technology provide a number of technical benefits and advantages, particularly in the area of unmanned aerial vehicles. As one example, the technology described herein enables control of an unmanned aerial vehicle (UAV) using compact and lightweight electronic solutions. Circuit boards having integrated reconfigurable processing systems enable reduced hardware implementations that provide multiple vehicle control processes and mission control processes for a UAV. Additionally, such solutions provide backup functions and multiple fail point implementations that can meet the high certification requirements of airborne applications. Moreover, the integration of such reconfigurable processing systems into a housing with one or more circuit boards that provide input/output (I/O) interfaces further enables reduced space and weight requirements.

Embodiments of the disclosed technology additionally also provide a number of technical benefits and advantages in the area of computing technology. For example, the disclosed system can provide diverse computing environments to meet the various demands of UAV applications. Multiple processing units spread across multiple integrated circuits provide a range of high speed processing options for application integration. Vehicle and mission control processes to be allocated to various hardware and/or software partitions according to criticality and performance needs. Moreover, embedded field programmable gate arrays tightly coupled to these processing units via integration on a single integrated circuit with corresponding processing units provides additional diversity and reliability.

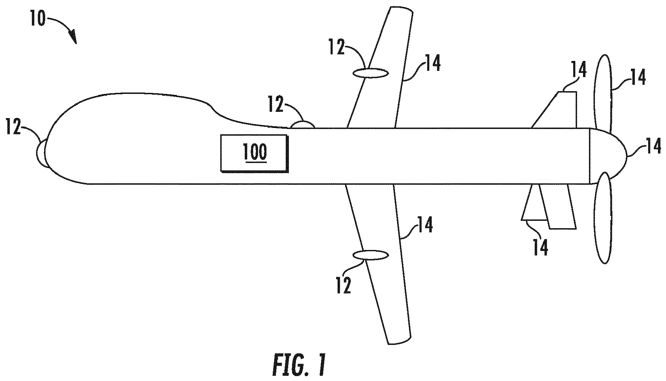

FIG. 1 is a schematic view of an example unmanned aerial vehicle (UAV) UAV 10. UAV 10 is a vehicle capable of flight without an onboard pilot. For example, and without limitation, UAV 10 may be a fixed wing aircraft, a tilt-rotor aircraft, a helicopter, a multirotor drone aircraft such as a quadcopter, a blimp, a dirigible, or other aircraft.

UAV 10 includes a plurality of vehicle devices including at least one propulsion and movement (PM) device 10. A PM device 14 produces a controlled force and/or maintains or changes a position, orientation, or location of UAV 10. A PM device 14 may be a thrust device or a control surface. A thrust device is a device that provides propulsion or thrust to UAV 10. For example, and without limitation, a thrust device may be a motor driven propeller, jet engine, or other source of propulsion. A control surface is a controllable surface or other device that provides a force due to deflection of an air stream passing over the control surface. For example, and without limitation, a control surface may be an elevator, rudder, aileron, spoiler, flap, slat, air brake, or trim device. Various actuators, servo motors, and other devices may be used to manipulate a control surface. PM device 14 may also be a mechanism configured to change a pitch angle of a propeller or rotor blade or a mechanism configured to change a tilt angle of a rotor blade.

UAV 10 may be controlled by systems described herein including, without limitation, an onboard control system including a control box 100, a ground control station (not shown in FIG. 1), and at least one PM device 14. UAV 10 may be controlled by, for example, and without limitation, real-time commands received by UAV 10 from the ground control station, a set of pre-programmed instructions received by UAV 10 from the ground control station, a set of instructions and/or programming stored in the onboard control system, or a combination of these controls.

Real-time commands can control at least one PM device 14. For example, and without limitation, real-time commands include instructions that, when executed by the onboard control system, cause a throttle adjustment, flap adjustment, aileron adjustment, rudder adjustment, or other control surface or thrust device adjustment.

In some embodiments, real-time commands can further control additional vehicle devices of UAV 10, such as one or more secondary devices 12. A secondary device 12 is an electric or electronic device configured to perform one or more secondary functions to direct propulsion or movement of the UAV. Secondary devices may be related to propulsion or movement of the UAV, but typically provide one or more vehicle or mission functions independent of direct control of vehicle propulsion or motion control. For example, secondary devices may include mission- related devices such as cameras or other sensors used for object detection and tracking. Other examples of secondary devices 12 may include sensors such as LIDAR/SONAR/RADAR sensors, GPS sensors, communication devices, navigation devices, and various payload delivery systems. For example, and without limitation, real-time commands include instructions that when executed by the onboard control system cause a camera to capture an image, a communications system to transmit data, or a processing component to program or configure one or more processing elements.

The UAV 10 is depicted by way of example, not limitation. Although much of the present disclosure is described with respect to unmanned aerial vehicle, it will be appreciated that embodiments of the disclosed technology may be used with any unmanned vehicle (UV), such as unmanned marine vehicles and unmanned ground vehicles. For example, the disclosed control systems may be used with unmanned boats, unmanned submarines, unmanned cars, unmanned trucks, or any other unmanned vehicle capable of locomotion.

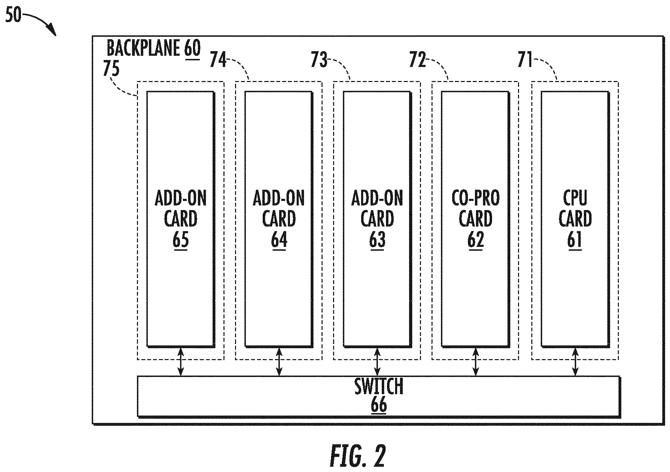

FIG. 2 is a block diagram depicting an example of a typical control system 50 for a UAV. In this example, a control system is formed using a backplane 60 having a plurality of card slots 71, 72, 73, 74, 75. Each card slot is configured to receive a card meeting a predefined set of mechanical and electrical standards. Each card includes one or more circuit boards, typically including one or more integrated circuits configured to perform specific vehicle or mission control functions. The card slot provides structural support for the card, as well as an electrical connection between the card and an underlying bus. A particular example is depicted having a CPU card 61 installed in a first card slot 71, a co-processor card 62 installed in a second card slot 72, and add-on cards 63, 64, 65 installed in card slots 73, 74, 75, respectively. By way of example, CPU card 61 may include a circuit board having a processor, PCI circuitry, switching circuitry, and an electrical connector configured to both structurally and electrically connect card 61 to card slot 71. Similarly, co-processor card 62 may include a processor, PCI circuitry, switching circuitry, and a connector.

Add-on cards 63, 64, 65 may include any number and type of cards configured to perform one or more vehicle and/or mission functions. Examples of add-on cards include input/output (I/O) cards, network cards, piloting and navigation function cards, sensor interface cards (e.g., cameras, radar, etc.), payload systems control cards, graphics processing unit (GPU) cards, and any other card for a particular type of vehicle and/or mission function.

Typical backplane architectures like that in FIG. 2 include a switch 66 that allows each card to communicate with cards in any other slot. Numerous examples including various standards exist to define different types of backplane architectures. For example, although switch 66 is shown separate from the card slots 71, 72, 73, 74, 75, some architectures may place a central switch in a particular slot of the backplane. In each case, the node devices can communicate with one another via the switch. While five card slots are depicted in FIG. 2, a backplane may include any number of card slots.

An onboard control system for a UAV utilizing a backplane architecture like that of FIG. 2 may be effective in providing some function control. Additionally, such an architecture may provide some configurability through hardware changes. However, traditional backplane architectures may have a number of drawbacks in implementations for UAVs. For example, the structural performance of a backplane coupling to a plurality of cards through a combined electrical and mechanical connection may not be well-suited to the high-stress environments of some UAVs. Mechanical and/or electrical failures may occur for one or more cards in the backplane due to vibrations, temperatures, and other factors. Additionally, such architectures provide a limited processing capability, while requiring considerable space and weight. Each card typically includes its own circuit board including connectors, switching circuitry, communication circuitry, etc. Because each circuit board requires its own circuitry for these common functions, a backplane architecture may provide relatively high weight and space requirements. Moreover, the computing ability and capacity of these types of systems is typically limited by a multiple card approach. Communication between the cards, and between the various processing elements may lead to reduced computational abilities.

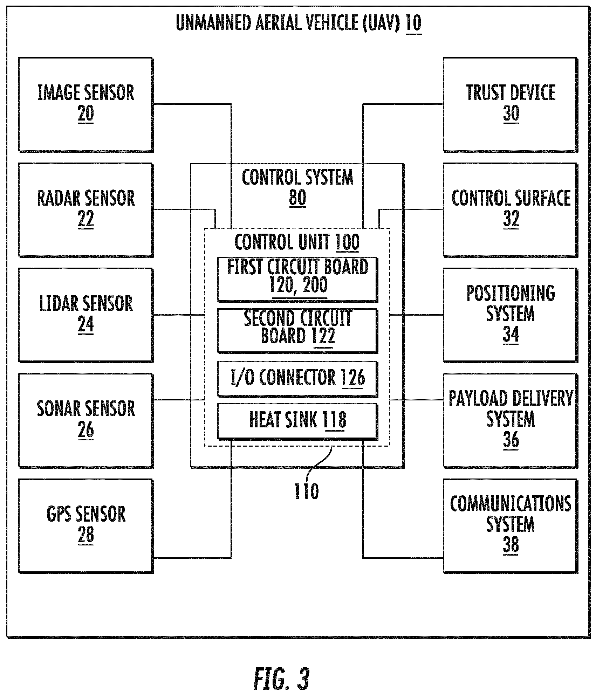

FIG. 3 is a block diagram depicting an unmanned aerial vehicle (UAV) 10 including a control system 80 in accordance with embodiments of the disclosed technology. Control system 80 includes a control box 100 that provides centralized control of vehicle and mission functions. The control box includes a housing 110 defining an interior. A first circuit board 120 and second circuit board 122 are disposed within the interior of housing 110, and an I/O connector 126 extends from the second circuit board 122 through the housing 110 as described hereinafter. Control box 100 includes a heat sink 118 provided to dissipate heat from the electric components of the control box 100. In example embodiments, heat sink 118 may form at least a portion of housing 110 as described hereinafter. Control system 80 may include additional components such as additional control units or other elements that perform vehicle or mission control processes.

In some implementations, first circuit board 120 comprises a control module for controlling vehicle and mission control processes of UAV 103, and second circuit board 122 comprises a carrier module for providing a communication interface between the control unit and various PM devices and secondary devices of the UAV.

In some examples, the first circuit board 120 includes multiple heterogeneous processing systems, each having a reconfigurable processing architecture to provide management of the various vehicle and mission functions. The multiple heterogeneous processing systems with reconfigurable functionality are suited to the diverse functions performed by unmanned airborne vehicles, as well as the high level of certifications typically needed for these vehicles.

In example embodiments, the second circuit board 122 is a carrier module providing an interface between the first circuit board 120 and the various PM devices and secondary devices of UAV 10. For example, FIG. 3 depicts a set of PM devices including a thrust device 30, control surface 32, and positioning system 34. Additionally, FIG. 3 depicts a set of secondary devices including an image sensor 20, a radar sensor 22, a LIDAR sensor 24, a sonar sensor 26, a GPS sensors 28, a payload delivery system 36, and a communication system 38. The second circuit board 122 may include an I/O connector that connects to a corresponding I/O connector of the first circuit board, as well as an I/O connector that extends from the housing. Additionally, the second circuit board may include a plurality of sensor connectors that extend from the housing. The second circuit board may provide a communications or input/output (I/O) interface including associated electronic circuitry that is used to send and receive data. More specifically, the communications interface can be used to send and receive data between any of the various integrated circuits of the second circuit board, and between the second circuit board and other circuit boards. For example, the item interface may include I/O connector 126, I/O connector 238, and/or I/O connector 124. Similarly, a communications interface at any one of the interface circuits may be used to communicate with outside components such as another aerial vehicle, a sensor, other vehicle devices, and/or ground control. A communications interface may be any combination of suitable wired or wireless communications interfaces.

In some examples, control box 100 may include additional components. For example, a third circuit board such as a mezzanine card can be provided within control box 100 in another embodiment. The third circuit board may include one or more nonvolatile memory arrays in some examples. For example, a solid-state drive (SSD) may be provided as one or more integrated circuits on a mezzanine card. Moreover, the control box 100 may include additional circuit boards to form a control module as well as additional circuit boards to form additional carrier modules.

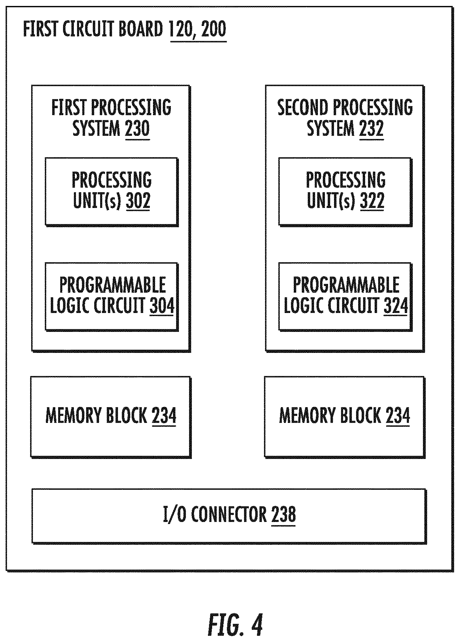

FIG. 4 is a block diagram describing a first circuit board 120 in accordance with example embodiments of the disclosed technology. In FIG. 4, first circuit board 120 is configured as a control module (e.g., control board) for an unmanned aerial vehicle (UAV). In example embodiments, first circuit board 120 is a system-on-module (SOM) card. First circuit board 120 includes a first processing system 230, second processing system 232, memory blocks 234, and an I/O connector 238.

The first and second processing systems can include or be associated with, any suitable number of individual microprocessors, power supplies, storage devices, interfaces, and other standard components. The processing systems can include or cooperate with any number of software programs (e.g., vehicle and mission control processes) or instructions designed to carry out the various methods, process tasks, calculations, and control/display functions necessary for operation of the aerial vehicle 10. Memory blocks 234 may include any suitable form of memory such as, without limitation, SDRAM, configured to support a corresponding processing system. For example, a first memory block 234 may be configured to support first processing system 230 and a second memory block 234 may be configured to support second processing system 232. Any number and type of memory block 234 may be used. By way of example, four memory blocks each comprising an individual integrated circuit may be provided to support the first processing system 230 and two memory blocks may be provided to support the second processing system 232.

I/O connector 238 extends from a first surface of first circuit board 122 to provide an operative communication link to second circuit board 122.

First processing system 230 and second processing system 232 form a heterogeneous and reconfigurable computing architecture in example embodiments of the disclosed technology, suitable to the diverse and stable needs of UAV 10. First processing system 230 includes one or more processing units 302 forming a first processing platform and one or more programmable logic circuits 304 forming a second processing platform. By way of example, one or more processing units 302 may include a central processing unit and programmable logic circuit 304 may include a volatile programmable logic array such as a RAM-based field programmable gate array (FPGA). Any number and type of processing unit may be used for processing units 302. Multiple processing units 302 and programmable logic circuit 304 may be provided within a first integrated circuit, referred to generally as a processing circuit in some embodiments.

Second processing system 232 includes one or more processing units 322 forming a third processing platform and one or more programmable logic circuits 324 forming a fourth processing platform. By way of example, one or more processing units 302 may include a co-processing unit and programmable logic circuit 324 may include a flash-based FPGA. Any number and type of processing unit may be used for processing units 324. One or more processing units 324 and programmable logic circuit 324 may be provided within the second integrated circuit, also referred to as a processing circuit in some embodiments.

By providing different processing unit types as well as different programmable logic circuit types in each processing system, first circuit board 120 provides a heterogeneous computing system uniquely suited to the processing and operational requirements of high-stress application UAVs. For example, the RAM-based and flash-based FPGA technologies are combined to leverage the strengths of both for UAV applications. The unique abilities of heterogeneous processing units 302 and 322 and heterogeneous programmable logic circuits 304 and 324 support both hardware and software-partitioned operating environments. Vehicle and mission control processes can be allocated to different partitions according to criticality and performance needs. This provides a control and monitor architecture suitable for critical operations. For example, an on/off or red/green architecture for control of irreversible critical functions is provided. By way of further example, one or more of the field programmable gate arrays may be configured to provide a fabric accelerator for onboard sensor processing

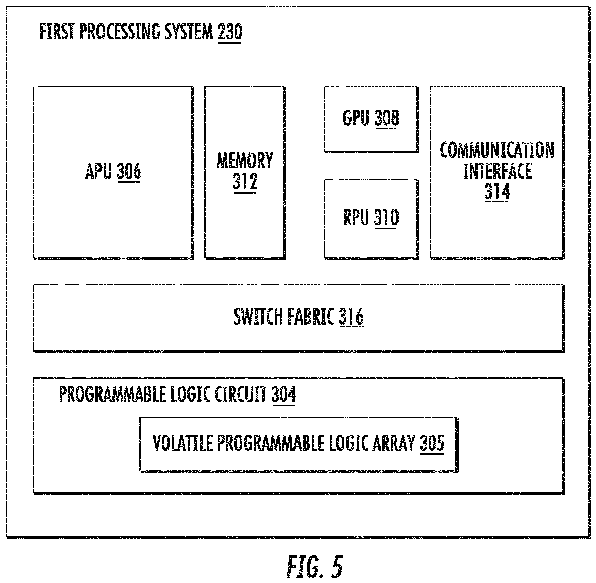

FIG. 5 is a block diagram describing additional details of first processing system 230 in accordance with example embodiments of the disclosed technology. In FIG. 5, first processing system 230 includes three processing units 302 as described in FIG. 4. More particularly, first processing system 230 includes an application processing unit (APU) 306, a graphics processing unit (GPU) 308, and a real-time processing unit (RPU) 310. Each of processing units 306, 308, 310 may be supported by memory 312 which may include any number and type of memory such as an SDRAM. Each processing unit is implemented on an individual integrated circuit referred to as a processing circuit. In one example, APU 306 is formed on a first processing circuit and includes a quad core processing unit comprising four processors. RPU 310 is formed on a third processing circuit and includes a dual core processing unit comprising two processors. GPU 308 is formed on a third processing circuit and includes a single core processing unit. A fourth processing unit is provided for the second processing system as described below. A switch fabric 316 connects the various components of processing system 230. Switch fabric 316, for example, may include a low-power switch and a central switch in some examples. Communication interface 314 couples first processing system 232 to first circuit board 120.

Programmable logic circuit 304 includes a volatile programmable logic array 305. In example embodiments, logic array may include a RAM-based programmable logic array 305 such as a RAM-based floating point gate array including RAM logic blocks or memory cells. Volatile programmable logic array 305 can be programmed with configuration data provided to the first processing system through communication interface 314. For example, a RAM-based FPGA can store configuration data in the static memory of the array, such as in an organization comprising an array of latches. The logic blocks are programmed (configured) when programmable logic circuit 304 is started or powered up. The configuration data can be provided to logic array 305 from an external memory (e.g., nonvolatile memory of first circuit board 120 or a mezzanine board as described hereinafter) or from an external source of UAV 10 (e.g., using second circuit board 122). A RAM-based FPGA provides high levels of configurability and re-configurability. Although not shown, logic array 305 may include various programmed circuits such as ethernet interfaces and PCI interfaces, and the various vehicle and mission control processes described herein.

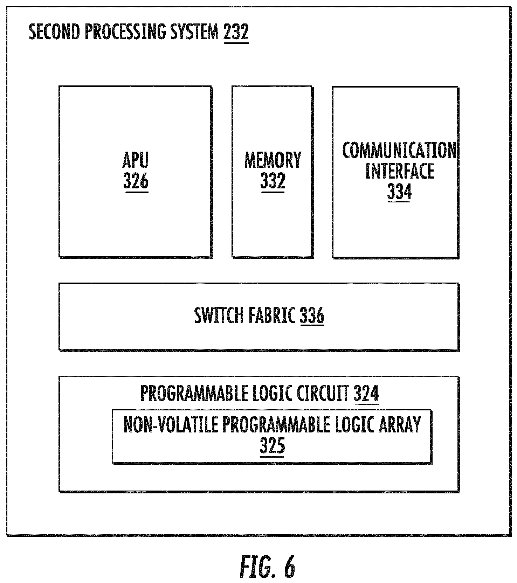

FIG. 6 is a block diagram describing additional details of second processing system 232 accordance with example embodiments of the disclosed technology. In FIG. 6, second processing system 232 includes an application processing unit (APU) 326 and memory 332. In one example, APU 326 is formed on a second processing circuit and includes a quad core processing unit comprising four processors. Memory 332 may include any number and type of memory such as SDRAM. A switch fabric 336 connects the various components of processing system 232. Communications interface 334 couples first processing system 232 to first circuit board 120.

Programmable logic circuit 324 includes a non-volatile programmable logic array 325. In example embodiments, logic array 325 may include a flash-based programmable logic array 325 such as a flash-based floating point gate array including flash logic blocks or memory cells. Non-volatile programmable logic array 325 can be programmed with configuration data provided to the second processing system through communication interface 334. For example, a flash-based FPGA can store configuration data in the nonvolatile memory of the array. Flash memory is used as the primary resource for storage of the configuration data such that RAM-based memory is not required. Because the configuration data is stored within the nonvolatile memory, there is no requirement for reading the configuration data to the logic array upon startup or power up. As such, the flash-based logic array may execute applications immediately upon power up. Moreover, external storage of configuration data is not required. The flash-based logic array can be reprogrammed or reconfigured by providing updated configuration data to override the configuration data presently stored in the logic array. The flash-based logic array may consume less power than the RAM-based logic array, as well as provide more protection against interference. Although not shown, logic array 325 may include various programmed circuits, such as for the various vehicle and mission control processes described herein. In one example, logic array 325 may include at least one FPGA fabric accelerator for onboard sensor processing.

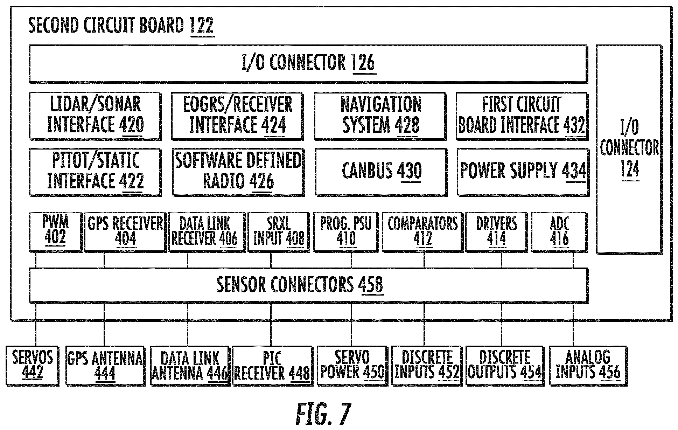

FIG. 7 is a block diagram depicting additional details of second circuit board 122 in accordance with example embodiments of the disclosed technology. In FIG. 7, second circuit board 122 is configured as a carrier module (e.g., carrier card) for an unmanned aerial vehicle (UAV). Second circuit board 122 includes a plurality of integrated circuits such as interface circuits providing I/O capabilities for control box 100. The interface circuits are configured to receive outputs of the plurality of vehicle devices of the UAV via the sensor connectors. The interface circuits provide vehicle device data based on outputs of the vehicle devices to the first circuit board via I/O connector 124. Second circuit board 122 includes an I/O connector 126 that extends from a housing of control unit 100 to provide an operative communication link to PM devices and secondary devices of UAV 10. Additionally, second circuit board 122 includes an I/O connector 124 extending from a first surface of second circuit board 122 to provide an operative communication link to first circuit board 120. Although not shown, second circuit board 122 may include an additional I/O connector for coupling to a mezzanine card including a solid-state drive, for example. Any one or a combination of I/O connectors 126, 124, and 228 may form an I/O interface between the interface circuits of the second circuit board and the first and second processing systems of the first circuit board.

FIG. 7 describes a particular set of interface circuits as may be used in the particular implementation of control box 100. It will be appreciated, however, that any number and type of interface circuit may be used as suited for a particular implementation. Second circuit board 122 includes a plurality of interface circuits such as a LIDAR/SONAR interface 420, a Pitot/static interface 422, an electro-optical grid reference system (EOGRS) receiver interface 424, and a first circuit board interface 432 for communicating with first circuit board 122. Second circuit board 122 also includes interface circuits such as a software defined radio 426, a navigation system 125, a controller area network bus (CANBUS) 430, and a power supply 434. In some embodiments, navigation system 428 is an integrated circuit providing an integrated navigation sensor suite, including various sensors such as inertial measurement sensors. Additionally, second circuit board 122 includes a number of interface circuits in operative communication with a plurality of vehicle devices (e.g., PM devices or secondary devices) of the UAV 10. A plurality of sensor connectors 458 extend from the housing of control unit 100 for coupling to the vehicle devices of UAV 10.

In the specific example of FIG. 7, one or more pulse width modulators (PWM) 402 are in operative communication with one or more servos 442 via a first sensor connector 458. Although a PWM servo command interface is depicted, other types of servo command interfaces may be used. For example, analog voltage, current loop, RS-422, RS-485, MIL-STD-1553 are all examples of possible servo control signals. A GPS receiver 404 is in operative communication with one or more GPS antennas for 444 via a second sensor connector 458. GPS antennas 444 are one example of a GPS sensor 28. A datalink receiver 406 is in operative communication with one or more datalink antennas 446 via a third sensor connector 458. A serial receiver link (SRXL) input 408 is in operative communication with a pilot in control (PIC) receiver 448 via a fourth sensor connector 458. A programmable power supply unit (PSU) 410 is in operative communication with a servo power 450 via a fifth sensor connector 458. One or more comparators 412 are in operative communication with one or more discrete inputs 452 via a sixth sensor connector 458. One or more drivers 414 are in operative communication with one or more discrete outputs 454 via a seventh sensor connector 458. One or more analog-to-digital converters (ADC) 416 are in operative communication with one or more analog inputs 456 via an eighth sensor connector 458.

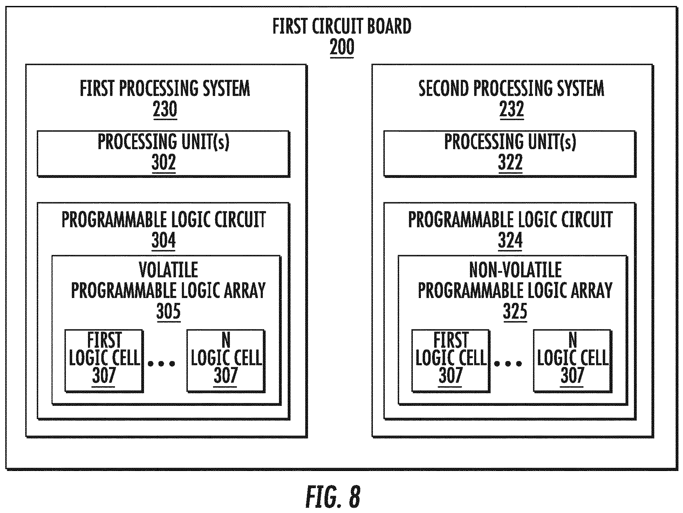

Referring now to FIG. 8, the volatile programmable logic array 305 of the first processing system 230 and the non-volatile programmable logic array 325 of the second processing system 232 each include a plurality of logic cells 307. In example embodiments, each logic cell of the plurality of logic cells 307 may be configured to perform a particular process based, at least in part, on configuration data. More specifically, the configuration data may specify configuration of one or more logic elements (e.g., logic gates, flip-flops, latches, etc.) included in each logic cell 307 in order to perform the particular process. As will be discussed below in more detail, the particular process may include, without limitation, a vehicle control process, a mission control process, or both.

An example of a vehicle control process includes filtering one or more signals received from the navigation system 428 (FIG. 7). For instance, the logic cells 307 of the volatile programmable logic array 305, the non-volatile programmable logic array 325, or both may be configured based on configuration data. More specifically, the logic cells 307 may be configured so that at least one of the logic arrays 305, 325 is configured to filter the one or more signals received from the navigation system 428. In example embodiment, the volatile programmable logic array 305, the non-volatile programmable logic array 325, or both may configured as a Kalman filter. However, it should be appreciated that the logic arrays 305, 325 may be configured as any suitable filter.

Another example of a vehicle control process includes an autopilot process. For instance, the processing units 302, 322 may be programmed to implement the autopilot process, and at least one of the FPGAs 305, 325 is configured to process one or more signals output by the processing units 302, 322 while implementing the autopilot process. More specifically, the one or more signals may include PWM commands for one or more servo motors that control orientation of the UAV. In this manner, the logic arrays 305, 325 can assist with some of the processing that is required for the autopilot application.

An example of a mission control process includes processing data from one or more sensors of the UAV to track a mobile device (e.g., cellphone) of a target individual. For instance, the logic cells 307 of the RAM-based FPGA 305 may be configured based on first configuration data. More specifically, the logic cells 307 may be configured so that the RAM-based FPGA 305 processes data from a first sensor configured to detect a transmission signal of the mobile phone. In this manner, the RAM-based FPGA 305 may process the transmission signal to determine a location of the mobile phone. Furthermore, once the location of the mobile device has been determined, the logic cells 307 of the RAM-based FPGA 325 may be reconfigured based on second configuration data that is different than the first configuration data. More specifically, the logic cells 307 may be reconfigured so that the RAM-based FPGA 325 processes image data from a second sensor, such as the image sensor 20 (FIG. 3). In this manner, one or more images of the present location of the mobile device may be obtained. It should be appreciated that the flash-based FPGA 325 may be configured based on first configuration data and subsequently reconfigured based on second configuration data in the same manner discussed above with reference to the RAM-based FPGA 305.

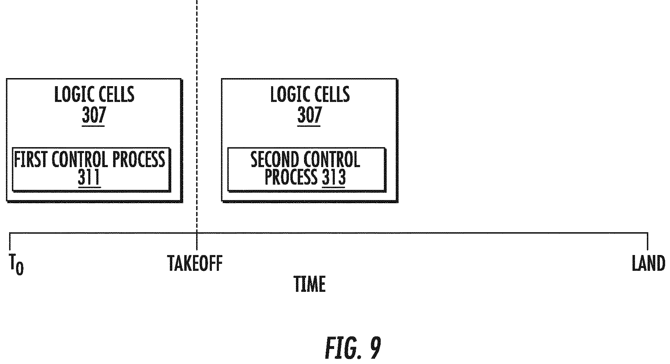

FIG. 9 is a graph depicting an example of when configuration and reconfiguration of the logic cells 307 may occur. As shown, configuring the logic cells 307 based on first configuration data to perform a first control process 311 (e.g., vehicle, mission, or both) may occur prior to takeoff, whereas reconfiguring the logic cells 307 based on second configuration data to perform a second control process 313 (e.g., vehicle, mission, or both) may occur while the UAV is airborne. In alternative embodiments, configuring the logic cells 307 based on the first configuration data to perform the first application 311 may also occur while the UAV is airborne.

In example embodiments, reconfiguring the logic cells 307 of the logic arrays 305, 325 may occur without user intervention. For instance, once the logic arrays 305, 325 complete a first task (e.g., determine a location) based on first configuration data, the first processing system 230 may automatically reconfigure the logic cells 307 of the volatile programmable logic array 305 based on second configuration data to perform a second task (e.g., obtain images). More specifically, one of the processing units 302, 322 or logic arrays 305, 325 may reconfigure the logic cells 307. For instance, the processing unit 302 of the first processing system 230 may communicate the second configuration data to the volatile programmable logic array 305 so that the first configuration data can be overwritten with the second configuration data. In example embodiments, a processing system of the control system may be configured to detect one or more events, and in response reconfigure a corresponding programmable logic array. Examples of events include completion of a task such as locating a target using a first sensor suite, receipt of a control command (e.g., from the ground station or another aerial vehicle), detecting that a processing system has been compromised, or any other suitable event may be used to trigger a reconfiguration of the programmable logic arrays 305, 325.

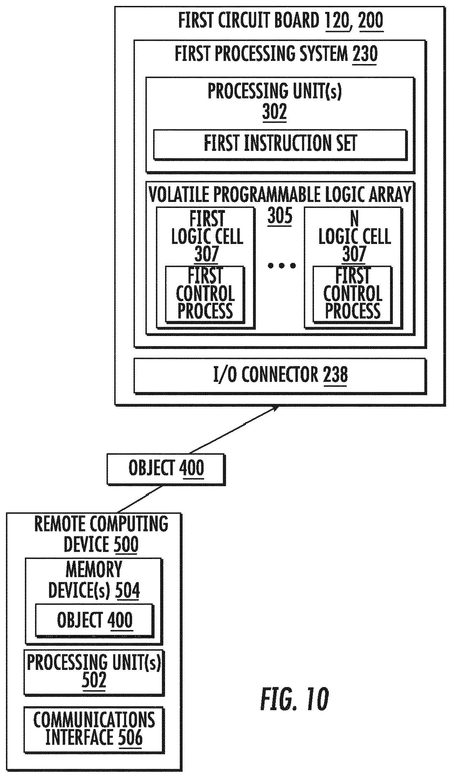

In example embodiments, the logic cells 307 may be reconfigured based on user intervention. For instance, as shown in FIG. 10, a pilot located at a ground station that is remote relative to the UAV may communicate a command to the first processing system 230. More specifically, the command may originate from a remote computing device 500 and may include second configuration data that is used to reconfigure the logic cells 307 of the volatile programmable logic array 305. As shown, the remote computing device 500 includes one or more processors 502 and one or more memory devices 504. In example embodiments, the one or more memory devices 504 may be configured to store configuration data that, as discussed above, may be used to reconfigure the logic cells 307 of at least one of the logic arrays 305, 325. Alternatively or additionally, the memory devices 504 may be configured to store the first data that, as discussed above, may be used to configure or program the logic arrays 305, 325. The remote computing device 500 may also include a communications interface 506. In example embodiments, the communications interface 506 allows the remote computing device 500 to communicate configuration data to the control unit 100 (FIG. 3). More specifically, the remote computing device 500 may be configured to communicate with the control unit 100 over a communication network.

Examples of the communication network may include, for example, a local area network (LAN), a wide area network (WAN), SATCOM network, VHF network, a HF network, a Wi-Fi network, a WiMAX network, a gatelink network, ARINC, MIL-STD-1153, Ethernet, CAN, RS-485, and/or any other suitable communications network for transmitting messages to and/or from the UAV 10, such as to a cloud computing environment and/or the remote computing device 500. Such networking environments may use a wide variety of communication protocols. The communication network includes any combination of wired and/or wireless communication links.

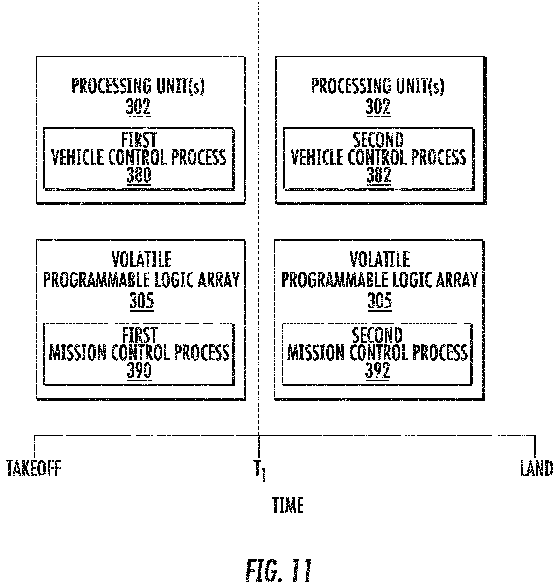

Referring now to FIGS. 8-11 in combination, the processing units 302, 322 and the logic arrays 305, 325 may be reprogrammed and reconfigured, respectively, while the UAV is in flight. For example, the processing unit 302 of the first processing system 230 may be programmed to implement a first vehicle control process 380 (e.g., autopilot process). In addition, the volatile programmable logic array 305 of the first processing system 230 may be configured based on first configuration data to perform a first mission control function 390 (e.g., radar detection). In some embodiments, the processing unit 302 and the volatile programmable logic array 305 may be programmed and configured, respectively, while the UAV 10 is on the ground. Alternatively, programming and configuration of the processing unit 302 and the logic array 305, respectively, may occur with the UAV is airborne.

Subsequent to programming the processing unit 302 and configuring the volatile programmable logic array 325, the first processing system 230 may obtain an object 400 (e.g., executable file) comprising computer-readable instructions and configuration data. More specifically, the configuration data may comprise second configuration data that is different than the first configuration data used to configure the logic array 305. As shown, the object 400 may be stored in the memory device 504 of the remote computing device 500 and communicated to the control system 80 (FIG. 3) over any suitable communication network. Alternatively, the object 400 may be stored locally in the memory 312 (FIG. 5) of the first processing system 230. It should be appreciated, however, that the object may be stored on any suitable memory device of the control system 80 (FIG. 3). For example, the object 400 may be stored in the memory 332 of the second processing system 232.

The processing unit 302 of the first processing system 230 may be reprogrammed based, at least in part, on the computer-readable instructions included in the object 400. More specifically, the processing unit 302 may be reprogrammed to perform a second vehicle control process 382. In example embodiments, the second vehicle control process 382 may be different than first vehicle control process 380. For instance, the first vehicle control process 380 may include an autopilot control process, whereas the second vehicle control process 382 may include a navigation control process.

The programmable logic array 305 may be reconfigured based, at least in part, on the configuration data. More specifically, the programmable logic array 305 may be reconfigured to perform a second mission control process 392. In example embodiments, the second mission control process 392 may be different than the first mission control process 390. Furthermore, although the reprogramming and reconfiguration has been discussed in the context of the first processing system 230, it should be appreciated that the second processing system 232 may be reprogrammed and reconfigured in the same manner.

In example embodiments, the object may be obtained in response to determining the first processing system 230 is operating in an unintended or unauthorized manner. Any suitable technique may be used to detect that the first processing system 230 has been compromised. For example, the first processing system 230 may be configured to examine instructions or configuration data for suspicious, unknown, or otherwise unauthorized code. More specifically, the processing unit 302 may be running one or more applications that allows the processing unit 302 to detect the suspicious, unknown, or otherwise unauthorized code. As another example, the second processing system 232 may be configured to monitor operation of the first processing system 230 for suspicious behavior. As yet another example, the remote computing device 500 may be configured to detect that the first processing system 230 has been compromised. For example, the remote computing device 500 may detect that the UAV is not responding to transmitted control signals in an expected manner.

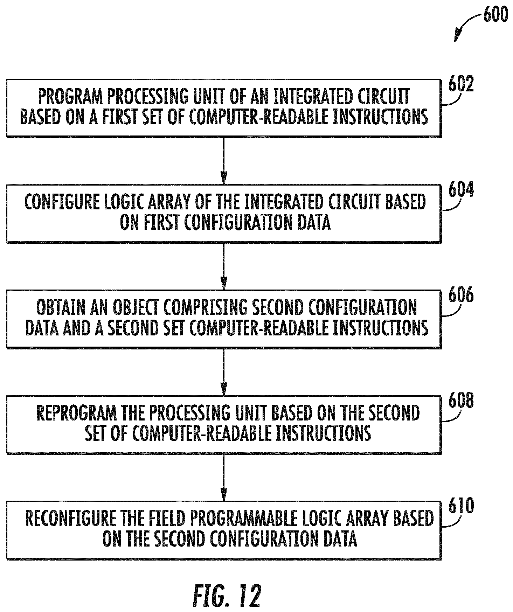

FIG. 12 depicts a flow diagram of an example method 600 for reconfiguring an integrated circuit according to example embodiments of the present disclosure. The method 600 may be implemented using, for instance, the first or second processing systems 230, 232 discussed above with reference to FIG. 8. FIG. 12 depicts steps performed in a particular order for purposes of illustration and discussion. Those of ordinary skill in the art, using the disclosures provided herein, will understand that various steps of the method 600 or any of the other methods disclosed herein may be adapted, modified, rearranged, performed simultaneously or modified in various ways without deviating from the scope of the present disclosure.

At (602), the method includes configuring, by one or more processing systems, a processing unit of an integrated circuit based on a first set of computer-readable instructions. In example embodiments, the processing unit is programmed based on the first set of computer-readable instructions to perform or implement one or more vehicle or mission control processes.

At (604), the method 600 includes configuring, by one or more processing systems, a programmable logic array of the integrated circuit based on first configuration data. More specifically, one or more logic cells of the programmable gate array are configured based on the first configuration data. In example embodiments, the programmable gate array is configured based on the first configuration data to implement one or more vehicle or mission control processes for a UAV

At (606), the method 600 includes obtaining, by the one or more processing systems, an object (e.g,. executable file) comprising second configuration data and a second set of computer-readable instructions. In example embodiments, the object may be stored locally in one or more memory devices of the integrated circuit. More specifically, the object may be stored in a memory device associated with the programmable logic array. Alternatively, the object may be stored in a remote computing device and communicated to the one or more processing systems via a communication network.

At (608), the method 600 includes reprogramming, by the one or more processing systems, the processing unit based on the second set of computer-readable instructions. In example embodiments, the processing unit may be reprogrammed to implement a vehicle or mission control process that is different than the vehicle or mission control process that the processing unit was previously programmed to implement.

At (610), the method 600 includes reconfiguring, by the one or more processing systems, the programmable logic array based on the second configuration data. In example embodiments, the processing unit may be reconfigured to implement a vehicle or mission control process that is different than the vehicle or mission control process the programmable logic array was previously configured to implement.

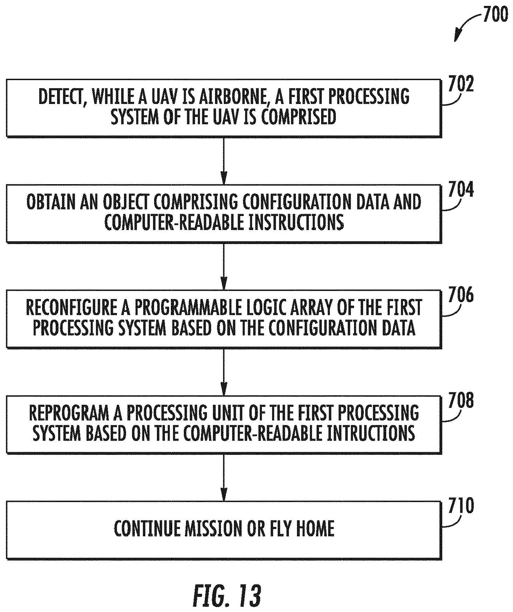

FIG. 13 depicts a flow diagram of a method 700 for reconfiguring a processing system onboard an unmanned aerial vehicle according to example embodiments of the present disclosure. The method 700 may be implemented using, for instance, the first processing system 230 discussed above with reference to FIG. 5. FIG. 13 depicts steps performed in a particular order for purposes of illustration and discussion. Those of ordinary skill in the art, using the disclosures provided herein, will understand that various steps of the method 700 or any of the other methods disclosed herein may be adapted, modified, rearranged, performed simultaneously or modified in various ways without deviating from the scope of the present disclosure

At (702), the method 700 includes detecting, by one or more processing systems, a first processing system is compromised. In example embodiments, detecting the first processing system may occur while the UAV is airborne (e.g., in flight). More specifically, the first processing system may be configured to detect its compromised state.

At (704), the method 700 includes obtaining, by the one or more processing systems, configuration data. In example embodiments, the configuration data may include second configuration data that can be used to reconfigure a programmable logic array of at least one of the processing system(s).

At (706), the method 700 includes reconfiguring, by the one or more processing systems, the programmable logic array based on the second configuration data. In example embodiments, the programmable logic array may be reconfigured to implement a vehicle or mission control process that is different than a vehicle or mission control process that the programmable logic array was previously configured to implement.

At (708), the method 700 includes reprogramming, by the one or more processing systems, the processing unit based on the computer-readable instructions. In example embodiments, the computer-readable instructions, when executed by the processing unit, may modify or update an operating system of the processing unit. More specifically, a first operating system that the processing unit was running prior to being reprogrammed may be overwritten with a second operating system that is different than the first operating system. For example, the first operating system may be a Linux based operating system, whereas the second operating system may be a Windows based operating system.

At (710), a mission that the UAV is currently performing may continue. Alternatively, the processing system may abort the mission and generate one or more control actions associated with landing the UAV. More specifically, the one or more control actions may cause the UAV to fly to a pre-approved location for landing.

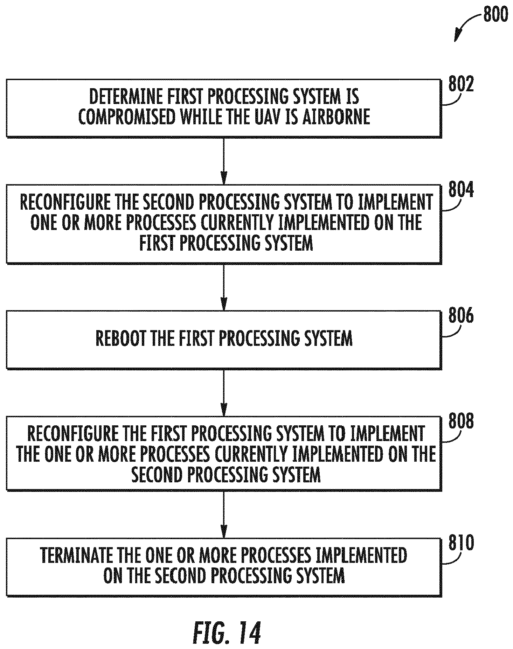

FIG. 14 depicts a flow diagram of another method 800 for reconfiguring a processing system onboard an unmanned aerial vehicle according to example embodiments of the present disclosure. The method 800 may be implemented using, for instance, the first processing system 230 discussed above with reference to FIG. 5. FIG. 13 depicts steps performed in a particular order for purposes of illustration and discussion. Those of ordinary skill in the art, using the disclosures provided herein, will understand that various steps of the method 800 or any of the other methods disclosed herein may be adapted, modified, rearranged, performed simultaneously or modified in various ways without deviating from the scope of the present disclosure

At (802), the method 800 includes detecting, by one or more processing systems, a first processing system is compromised. In example embodiments, detecting the first processing system may occur while the UAV is airborne (e.g., in flight). More specifically, the first processing system may be configured to detect its compromised state.

At (804), the method 800 includes reconfiguring, by one or more processing systems, a second processing system to perform one or more processes currently implemented by the first processing system. For instance, the one or more processes may include at least one of a vehicle control process and a mission control process. Once the second processing system has been reconfigured, the method 800 proceeds to (804).

At (804), the method 800 includes rebooting, by the one or more processing systems, the first processing system. In example embodiments, rebooting the first processing system may be accomplished by cycling a power supply for the first processing system.

At (806), the method 800 includes reconfiguring, by the one or more processing systems, the first processing system to perform the one or more processes currently implemented on the second processing system. Once the first processing system has been reconfigured, the method 800 proceeds to (808).

At (808), the method 800 includes terminating the one or more vehicle control applications implemented on the second processing system.

In example embodiments, a control system 80 (FIG. 3) for an unmanned aerial vehicle (UAV) may include one or more control boxes 100. Multiple control boxes 100 may be provided in some implementations to provide additional computing capacity, redundancy, and/or to provide verification processes for certain UAV functions. For example, the verification process may be implemented to require majority agreement or a concurrent output from a majority of control boxes in order to execute a particular vehicle function.

In accordance with some aspects, reconfiguring one or more programmable logic arrays may be performed across multiple control boxes 100. For example, a programmable logic array 305 on a first circuit board 120 at a first control box 100 may be reconfigured in response to an event or process at a second control box 100. Such implementations utilizing dynamic reconfiguration processes can be used to guarantee that critical or essential functions remain available in case of partial failures in the system. For instance, in response to a failure of the autopilot or other navigation system executed by a first control box, a backup autopilot or navigation system can be configured for execution in the programmable gate array at a second control box.

In another example, multiple control boxes 100 may be used provide redundancy and/or majority agreement verification processes. Additionally, reconfiguration can be employed so that computing resources are not underutilized. For example, some UAV functions may be implemented to require a majority agreement amongst multiple control boxes 100 in order for the function to be performed or for other activity to be taken. Accordingly, one example of the disclosed technology includes using a first subset of control boxes 100 (e.g., two control boxes) as part of the verification process that implements majority agreement. If the output of the subset of control boxes 100 are not in agreement such that there is no majority agreement, an additional control box 100 (e.g., a third control box) can be configured to perform the process for which the outputs do not agree. The output of the third control box 100 can then be compared to the outputs of the other two control boxes 100 in order to determine a majority agreement. Once a majority agreement is determined, the third control box 100 can be reconfigured back to its original processes for other UAV functions. In this manner, the third control box can be used to execute various vehicle and/or mission control functions when a third control box for majority agreement is not needed. When a third control box is needed, a programmable logic array (e.g., a flash-based FPGA or a RAM-based FPGA) of the third control box 100 can be reconfigured to generate an output for determining majority agreement. After the output is generated, the third control box can be reconfigured for other vehicle and/or mission control functions.

Some embodiments of the disclosed technology may be implemented as hardware, software, or as a combination of hardware and software. The software may be stored as processor readable code and implemented in a processor, as processor readable code for programming a processor for example. In some implementations, one or more of the components can be implemented individually or in combination with one or more other components as a packaged functional hardware unit (e.g., one or more electrical circuits) designed for use with other units, a portion of program code (e.g., software or firmware) executable by a processor that usually performs a particular function of related functions, or a self-contained hardware or software component that interfaces with a larger system, for example. Each hardware unit, for example, may include an application specific integrated circuit (ASIC), a Field Programmable Gate Array (FPGA), a circuit, a digital logic circuit, an analog circuit, a combination of discrete circuits, gates, or any other type of hardware or combination thereof. Alternatively or in addition, these components may include software stored in a processor readable device (e.g., memory) to program a processor to perform the functions described herein, including various mission and vehicle control processes.

Processing units can include any number and type of processor, such as a microprocessor, microcontroller, or other suitable processing device. Memory device(s) can include one or more computer-readable media, including, but not limited to, non-transitory computer-readable media, RAM, ROM, hard drives, flash drives, or other memory devices.

Memory blocks and other memory described herein can store information accessible by one or more processing units or logic array, including computer-readable instructions that can be executed by the one or more processor(s). The instructions can be any set of instructions that when executed by a processor, cause the processor to perform operations. The instructions can be software written in any suitable programming language or can be implemented in hardware. In some embodiments, the instructions can be executed by a processor to cause the processor to perform operations, such as the operations for controlling vehicle and/or mission functions, and/or any other operations or functions of a computing device.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the claimed subject matter, including the best mode, and also to enable any person skilled in the art to practice the claimed subject matter, including making and using any devices or systems and performing any incorporated methods. The patentable scope of the disclosed technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A control system for an unmanned vehicle, comprising:
   one or more processing units configured to execute a first vehicle control process;
   a field programmable gate array (FPGA) in operative communication with the one or more processing units, the FPGA comprising a plurality of logic cells, the FPGA configured to:
      program the plurality of logic cells according to first configuration data and execute a second vehicle control process based on the first configuration data;
      obtain, while the unmanned vehicle is operating, second configuration data for a third vehicle control process to replace the second vehicle process; and
      reprogram, while the UAV is operating, the plurality of logic cells according to the second configuration data and execute a third vehicle control process.
2. The control system of clause 1, wherein:
   the second vehicle control process is associated with a first vehicle navigation function;
   the third vehicle control process is associated with the first vehicle navigation function.
3. The control system of any preceding clause, wherein when the FPGA executes the third vehicle control process, the FPGA filters one or more signals received from a navigation system of the unmanned aerial vehicle.
4. The control system of any preceding clause, wherein:
   the second vehicle control process is associated with a first vehicle navigation function;
   the FPGA is configured to enable navigation control of the unmanned vehicle according to the second vehicle control process; and
   the FPGA is configured to suspend navigational control of the unmanned vehicle according to the second vehicle control process and transfer navigation control of the unmanned vehicle to the third vehicle control process.
5. The control system of any preceding clause, wherein:
   the one or more processing units are one or more first processing units and the FPGA is a first FPGA;
   the one or more first processing units and the first FPGA are formed in a first integrated circuit; and
   the control system further comprises a second integrated circuit including a second FPGA, the second FPGA including a plurality of logic cells.
6. The control system of any preceding clause, wherein:
   the first FPGA is a RAM-based FPGA; and
   the second FPGA is a flash-based FPGA.
7. The control system of any preceding clause, wherein the one or more first processing units are configured to detect an unauthorized modification to the first vehicle control process.
8. The control system of any preceding clause, wherein:
   the one or more second processing units are configured to implement the first vehicle control process;
   subsequent to configuring the one or more second processing units, the one or more first processing units are rebooted;
   subsequent to rebooting the one or more first processing units, the one or more processing units are configured to implement the first vehicle control process; and
   subsequent to reconfiguring the first processing system, the one or more processes executed by the one or more second processing units are terminated.
9. The control system of any preceding clause, further comprising:
   a first housing defining a first interior;
   a first circuit board disposed within the first interior, the first circuit board comprising the one or more processing units;
   a second housing defining a second interior; and
   a second circuit board disposed within the second housing, the second circuit board comprising the FPGA.
10. An unmanned aerial vehicle, comprising:
   a circuit board comprising a first processing system and a second processing system, the first and second processing system each comprising a processing unit and a programmable logic array comprising a plurality of logic cells, at least one of the first and second processing systems configured to perform operations while the unmanned aerial vehicle is in flight, the operations comprising:
      detecting, while the unmanned aerial vehicle is in flight, the first processing system is compromised;
      responsive to detecting the first processing system is compromised, obtaining, while the unmanned aerial vehicle is in flight, configuration data; and
   reconfiguring, while the unmanned aerial vehicle is in flight, the programmable logic array of the first processing system based on the configuration data.
11. The unmanned aerial vehicle of any preceding clause, wherein the obtaining further comprises obtaining an object comprising the configuration data and computer-readable instructions.
12. The unmanned aerial vehicle of any preceding clause, wherein the operations further comprise reprogramming, while the unmanned aerial vehicle is in flight, the processing unit of the first processing system based on the computer-readable instructions.
13. The unmanned aerial vehicle of any preceding clause, wherein the configuration data and computer-readable instructions are included within an object that is stored locally on a memory device associated with at least one of the first and second processing systems.
14. The unmanned aerial vehicle of any preceding clause, wherein the configuration data and computer-readable instructions are included within an object that is obtained from a remote computing device communicatively coupled to the unmanned aerial vehicle over a communication network.
15. The unmanned aerial vehicle of any preceding clause, wherein the programmable logic array is at least one of a RAM-based field programmable gate array or a flash-based programmable gate array.
16. The unmanned aerial vehicle of any preceding clause, wherein:
   subsequent to the reprogramming, the processing unit of the first processing system is configured with a first operating system; and
   the reprogramming comprises overwriting the first operating system with a second operating system that is different than the first operating system.
17. A method for reconfiguring integrated circuits, comprising:
   programming, by one or more processing systems, a processing unit of an integrated circuit based on a first set of computer-readable instructions;
   configuring, by one or more processing systems, a programmable logic array of the integrated circuit based on first configuration data;
   obtaining, by the one or more processing systems, an object comprising second configuration data and a second set of computer-readable instructions, the second configuration data different than the first configuration data, the second set of computer-readable instructions different than the first set of computer-readable instructions;
   reprogramming, by the one or more processing systems, the processing unit based on the second set of computer-readable instructions; and
   reconfiguring, by the one or more processing systems, the programmable logic array based on the second configuration data.
18. The method of any preceding clause, wherein the one or more processing systems include the processor.
19. The method of any preceding clause, wherein the one or more processing systems include the programmable logic array.
20. The method of any preceding clause, wherein the programmable logic array comprises a RAM-based field programmable gate array.

## Claims

1. A control system (80) for an unmanned vehicle, comprising:
one or more processing units (302) configured to execute a first vehicle control process;
a field programmable gate array (FPGA) (305) in operative communication with the one or more processing units (302), the FPGA (305) comprising a plurality of logic cells (307), the FPGA (305) configured to:
program the plurality of logic cells (307) according to first configuration data and execute a second vehicle control process based on the first configuration data;
obtain, while the unmanned vehicle is operating, second configuration data for a third vehicle control process to replace the second vehicle process; and
reprogram, while the UAV is operating, the plurality of logic cells according to the second configuration data and execute a third vehicle control process.

2. The control system (80) of claim 1, wherein:
the second vehicle control process is associated with a first vehicle navigation function;
the third vehicle control process is associated with the first vehicle navigation function.

3. The control system (80) of either of claim 1 or 2, wherein when the FPGA (305) executes the third vehicle control process, the FPGA (305) filters one or more signals received from a navigation system (428) of the unmanned aerial vehicle.

4. The control system (80) of any preceding claim, wherein:
the second vehicle control process is associated with a first vehicle navigation function;
the FPGA (305) is configured to enable navigation control of the unmanned vehicle according to the second vehicle control process; and
the FPGA (305) is configured to suspend navigational control of the unmanned vehicle according to the second vehicle control process and transfer navigation control of the unmanned vehicle to the third vehicle control process.

5. The control system (80) of any preceding claim, wherein:
the one or more processing units (302) are one or more first processing units and the FPGA (305) is a first FPGA;
the one or more first processing units and the first FPGA are formed in a first integrated circuit; and
the control system further comprises a second integrated circuit including a second FPGA (325), the second FPGA (325) including a plurality of logic cells (307).

6. The control system (80) of claim 5, wherein:
the first FPGA is a RAM-based FPGA; and
the second FPGA is a flash-based FPGA.

7. The control system (80) of either of claims 5 or 6, wherein the one or more first processing units are configured to detect an unauthorized modification to the first vehicle control process.

8. The control system (80) of any of claims 5 to 7, wherein:
the one or more second processing units are configured to implement the first vehicle control process;
subsequent to configuring the one or more second processing units, the one or more first processing units are rebooted;
subsequent to rebooting the one or more first processing units, the one or more second processing units are configured to implement the first vehicle control process; and
subsequent to reconfiguring the first integrated circuit, the one or more processes executed by the one or more second processing units are terminated.

9. The control system (80) of any preceding claim, further comprising:
a first housing defining a first interior;
a first circuit board (120) disposed within the first interior, the first circuit board (120) comprising the one or more processing units (302);
a second housing defining a second interior; and
a second circuit board disposed within the second housing, the second circuit board (122) comprising the FPGA (305).

10. An unmanned aerial vehicle, comprising:
a circuit board (200) comprising a first processing system (230) and a second processing system (232), the first and second processing system (230, 232) each comprising a processing unit (302, 322) and a programmable logic array (305, 325) comprising a plurality of logic cells (307), at least one of the first and second processing systems (230, 232) configured to perform operations while the unmanned aerial vehicle is in flight, the operations comprising:
detecting, while the unmanned aerial vehicle is in flight, the first processing system (230) is compromised;
responsive to detecting the first processing system (230) is compromised, obtaining, while the unmanned aerial vehicle is in flight, configuration data; and
reconfiguring, while the unmanned aerial vehicle is in flight, the programmable logic array (305) of the first processing system (230) based on the configuration data.

11. The unmanned aerial vehicle of claim 10, wherein the obtaining further comprises obtaining an object (400) comprising the configuration data and computer-readable instructions.

12. The unmanned aerial vehicle of claim 11, wherein the operations further comprise reprogramming, while the unmanned aerial vehicle is in flight, the processing unit (302) of the first processing system (230) based on the computer-readable instructions.

13. The unmanned aerial vehicle of either of claim 11 or 12, wherein the object (400) is stored locally on a memory device (312, 332) associated with at least one of the first and second processing systems (230, 232).

14. The unmanned aerial vehicle of any of claims 11 to 13, wherein the object (400) is obtained from a remote computing device (500) communicatively coupled to the unmanned aerial vehicle over a communication network.

15. The unmanned aerial vehicle of any of claims 12 to 14, wherein:
subsequent to the reprogramming, the processing unit (302) of the first processing system (230) is configured with a first operating system; and
the reprogramming comprises overwriting the first operating system with a second operating system that is different than the first operating system.

16. A method for reconfiguring integrated circuits, comprising:
programming, by one or more processing systems, a processing unit of an integrated circuit based on a first set of computer-readable instructions;
configuring, by one or more processing systems, a programmable logic array of the integrated circuit based on first configuration data;
obtaining, by the one or more processing systems, an object comprising second configuration data and a second set of computer-readable instructions, the second configuration data different than the first configuration data, the second set of computer-readable instructions different than the first set of computer-readable instructions;
reprogramming, by the one or more processing systems, the processing unit based on the second set of computer-readable instructions; and
reconfiguring, by the one or more processing systems, the programmable logic array based on the second configuration data.
